# FASCICULE DE BREVET EUROPEEN

(11) **EP 2 895 938 B1**
(45) Date de publication et mention de la délivrance du brevet: **31.10.2018**
(21) Numéro de dépôt: 13774741.6
(22) Date de dépôt: 11.09.2013
(51) Int. Cl.: G06F 3/041, G06F 3/042

(54) **SYSTEME D'INTERFACE UTILISATEUR SANS CONTACT**
KONTAKTLOSES BENUTZERSCHNITTSTELLENSYSTEM
NON-CONTACT USER INTERFACE SYSTEM

(30) Priorité: 12.09.2012 FR 1258546
(43) Date de publication de la demande: 22.07.2015
(73) Titulaire: Commissariat à l'Energie Atomique et aux Energies Alternatives, 75015 Paris (FR); ISORG, 38000 Grenoble (FR)
(72) Inventeur: GRAS, Antoine, F-38000 Grenoble (FR); VAILLANT, Jérôme, F-38000 Grenoble (FR)
(74) Mandataire: Cabinet Beaumont
(86) Numéro de dépôt international: PCT/FR2013/052090
(87) Numéro de publication internationale: WO 2014/041301

(56) Documents cités:
- JP-A- 2010 055 507
- US-A1- 2005 280 637
- US-A1- 2008 297 487
- AEPI ET AL: "ISORG a présenté lors du Forum 4I une tablette interactive", INTERNET CITATION, 19 juin 2011 (2011-06-19), page 1, XP002674961, Extrait de l'Internet: URL:http://www.isorg.fr/rep-edito/ido-61/i sorg_a_prb_sentb_lors_du_forum_4i_une_tabl ette_interactive.html [extrait le 2012-04-27]

## Description

### Domaine de l'invention

La présente invention concerne un système d'interface utilisateur, ou interface homme-machine, comprenant un dispositif d'affichage et un dispositif de détection sans contact d'un organe d'actionnement.

### Exposé de l'art antérieur

On a déjà proposé des systèmes d'interface utilisateur contrôlables par simple glissement d'un organe d'actionnement sur une surface sensible au toucher, ou surface tactile, qui est superposée ou intégrée à un écran d'affichage, ce qui permet de réaliser une interface utilisateur interactive, ou écran tactile. L'organe d'actionnement correspond, par exemple, à un stylet, un doigt ou la main d'un utilisateur. Les écrans comprenant une surface tactile sont actuellement utilisés dans de nombreux domaines. A titre d'exemple, ils ont déjà été utilisés pour commander des téléphones mobiles, des ordinateurs, des postes de télévision, des véhicules automobiles, des billetteries automatiques, des équipements industriels, des équipements médicaux, etc.

Un inconvénient de ce type d'interface est que la surface tactile tend à se salir assez rapidement au contact des doigts des utilisateurs. Ceci implique qu'un nettoyage régulier doit être prévu, en particulier en cas d'utilisation dans des environnements salissants (usines, transports en communs, etc.). Les surfaces tactiles posent en outre un problème d'hygiène, en particulier dans les hôpitaux où elles peuvent être un vecteur de transmission de maladies. Par ailleurs, le fonctionnement des surfaces tactiles est généralement dégradé lorsque l'utilisateur est équipé de gants. Ceci peut poser problème dans certains domaines d'application (industrie, chirurgie, utilisation en extérieur par temps froid, billetterie automatique de station de ski, etc.).

La demande de brevet français FR11/58607 décrit un système d'interface utilisateur comprenant un dispositif de détection d'un organe d'actionnement sans contact comprenant des cellules photodétectrices ou photodétecteurs. Dans certains modes de réalisation décrits dans cette demande de brevet, le système d'interface comprend un écran d'affichage, les cellules photodétectrices recouvrant l'écran d'affichage ou étant intégrées à l'écran d'affichage.

Un inconvénient des systèmes d'interface utilisateur dans lesquels le dispositif de détection recouvre le dispositif d'affichage ou est intégré au dispositif d'affichage est que le dispositif de détection peut dégrader la qualité de l'écran d'affichage. En effet, dans le cas où le dispositif de détection recouvre l'écran d'affichage, il peut être difficile de réaliser la totalité des éléments constituant le dispositif de détection avec des matériaux parfaitement transparents de façon que la surface de détection ne soit pas visible par l'utilisateur. En outre, une autre difficulté est que le dispositif d'affichage ne doit pas perturber le fonctionnement du dispositif de détection. Ceci peut notamment être difficile à obtenir lorsque le dispositif de détection comprend des capteurs photosensibles. Lorsque le dispositif de détection est intégré à l'écran d'affichage, la place occupée par les photodétecteurs réduit la place disponible pour les pixels et peut également dégrader la qualité de l'image affichée.

La demande de brevet WO2011/119483 décrit un exemple de système d'interface utilisateur comprenant un écran d'affichage et un dispositif de détection d'un organe d'actionnement qui ne recouvre pas l'écran d'affichage. En effet, le dispositif de détection comprend des diodes électroluminescentes et des photodétecteurs disposés sur les bords de l'écran de façon à détecter la présence d'un stylet ou un doigt. L'avantage d'une telle interface utilisateur est que la qualité de l'écran d'affichage n'est pas dégradée par le dispositif de détection. Toutefois, la présence des diodes électroluminescentes et des photodétecteurs à la périphérie de l'écran d'affichage augmente l'encombrement du système d'interface utilisateur. En particulier, l'épaisseur du système d'interface utilisateur doit être suffisante pour loger les diodes électroluminescentes et des photodétecteurs à la périphérie de l'écran d'affichage. La réalisation d'un système d'interface utilisateur à encombrement réduit peut être difficile.

Les demandes de brevet JP 2010 055507 et US 2008/297487 décrivent d'autres exemples de systèmes d'interface utilisateur intégrant un écran d'affichage et un dispositif de détection tactile.

### Résumé

Ainsi, un objet d'un mode de réalisation de la présente invention est de palier au moins en partie les inconvénients des systèmes d'interface utilisateur décrits précédemment.

Un autre objet d'un mode de réalisation de la présente invention est de prévoir un système d'interface utilisateur comprenant un dispositif d'affichage et un dispositif de détection sans contact d'un organe d'actionnement qui est intégré au dispositif d'affichage ou qui recouvre le dispositif d'affichage et qui ne dégrade pas la qualité de l'image affichée perçue par l'utilisateur.

Un autre objet d'un mode de réalisation de la présente invention est de prévoir un système d'interface utilisateur pouvant être mis en oeuvre avec tout type de dispositif d'affichage, notamment un écran à cristaux liquides, un écran plasma, un écran à base de composants semiconducteurs organiques, par exemple des diodes électroluminescentes organiques, ou un système d'affichage passif, par exemple une image imprimée sur un support.

Un autre objet d'un mode de réalisation de la présente invention est de prévoir un système d'interface utilisateur pouvant être mis en oeuvre avec tout type de dispositif de détection à base de photodétecteurs, notamment des photodétecteurs réalisés par des matériaux semiconducteurs inorganiques ou organiques.

Ainsi, un mode de réalisation de la présente invention prévoit un système d'interface utilisateur comprenant des rangées de capteurs de photons pour la détection d'un organe d'actionnement et des lentilles, chaque lentille recouvrant, à l'exception de la portion centrale de la lentille, au moins partiellement une rangée de capteurs de photons.

Selon un mode de réalisation de la présente invention, chaque lentille comprend une face non plane comprenant ladite portion centrale et, pour chaque lentille, la surface de la projection orthogonale de la portion centrale sur un plan contenant les rangées est supérieure ou égale à 50 % de la surface de la projection orthogonale de la face non plane sur ledit plan.

Selon un mode de réalisation de la présente invention, le système d'interface utilisateur comprend un dispositif d'affichage comprenant des rangées de pixels et un dispositif de détection de l'organe d'actionnement comprenant les rangées de capteurs de photons, les lentilles recouvrant les pixels et les capteurs de photons, la portion centrale de chaque lentille recouvrant au moins un pixel et ne recouvrant pas de capteur de photons.

Selon un mode de réalisation de la présente invention, chaque lentille comprend une portion périphérique entourant la portion centrale, au moins une partie de la portion périphérique recouvrant au moins une partie d'une rangée de capteurs de photons.

Selon un mode de réalisation de la présente invention, le dispositif de détection recouvre le dispositif d'affichage ou est intégré au dispositif d'affichage.

Selon un mode de réalisation de la présente invention, les rangées de pixels sont parallèles aux rangées de capteurs de photons.

Selon un mode de réalisation de la présente invention, chaque lentille recouvre la totalité de la largeur d'une seule rangée de pixels.

Selon un mode de réalisation de la présente invention, chaque lentille est une lentille cylindrique s'étendant parallèlement aux rangées de capteurs de photons.

Selon un mode de réalisation de la présente invention, le dispositif de détection est intégré au dispositif d'affichage et chaque rangée de pixels est interposée entre deux rangées de capteurs de photons, à l'exception éventuelle des rangées de pixels s'étendant le long des bords du dispositif d'affichage.

Selon un mode de réalisation de la présente invention, le dispositif de détection recouvre le dispositif d'affichage et les rangées de capteurs de photons sont séparées par des bandes transparentes, chaque bande transparente recouvrant au moins une rangée de pixels.

Selon un mode de réalisation de la présente invention, le dispositif d'affichage est un écran d'affichage, les pixels recouverts par les rangées de capteurs de photons restant noirs en fonctionnement.

Selon un mode de réalisation de la présente invention, les lentilles sont jointives.

Selon un mode de réalisation de la présente invention, les lentilles sont séparées les unes des autres par un interstice d'air ou par un matériau opaque.

Selon un mode de réalisation de la présente invention, le dispositif de détection est adapté à détecter des variations de l'ombre et/ou de l'image de l'organe d'actionnement et à en déduire une information représentative d'une variation de position de l'organe d'actionnement.

Selon un mode de réalisation de la présente invention, le système comprend des émetteurs infrarouges.

Selon un mode de réalisation de la présente invention, les capteurs de photons sont des capteurs organiques réalisés par dépôt de matériaux conducteurs et semiconducteurs organiques sous forme liquide sur un support diélectrique.

Selon un mode de réalisation de la présente invention, le dispositif d'affichage comprend un écran d'affichage ou une image fixée à un support.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
les figures 1 et 2 sont respectivement une vue en coupe et une vue en perspective, partielles et schématiques, d'un mode de réalisation d'un système d'interface utilisateur selon l'invention ;
les figures 3 et 4 illustrent deux exemples de fonctionnement du système d'interface utilisateur des figures 1 et 2 ;
les figures 5 et 6 sont respectivement une vue en coupe et une vue en perspective, partielles et schématiques, d'un autre mode de réalisation d'un système d'interface utilisateur selon l'invention ;
la figure 7 est une vue en perspective, partielle et schématique, d'un autre mode de réalisation d'un système d'interface utilisateur selon l'invention ;
les figures 8 à 10 sont des coupes, partielles et schématiques, d'autres modes de réalisation d'un système d'interface utilisateur selon l'invention ;
la figure 11 est une coupe, partielle et schématique, illustrant un mode de réalisation de photodétecteurs selon l'invention ; et
la figure 12 est une vue de face, partielle et schématique, d'un exemple de dispositif de détection d'un système d'interface utilisateur selon l'invention.

### Description détaillée

Par souci de clarté, de mêmes éléments ont été désignés par de mêmes références aux différentes figures et, de plus, les diverses figures ne sont pas tracées à l'échelle. En outre, seuls les éléments utiles à la compréhension de l'invention ont été représentés et seront décrits. En particulier, l'utilisation faite des systèmes d'interface utilisateur décrits ci-après n'a pas été détaillée. L'homme de l'art saura utiliser les systèmes proposés dans tout type d'appareil susceptible d'être commandé via une interface tactile et/ou sans contact. De plus, les moyens de traitement des informations fournies par les systèmes d'interface utilisateur décrits ci-après, et les moyens de liaison avec le ou les appareils à commander, sont à la portée de l'homme de l'art et ne seront pas décrits. Dans la suite de la description, sauf indication contraire, les termes "sensiblement", "environ" et "de l'ordre de" signifient "à 10 % près".

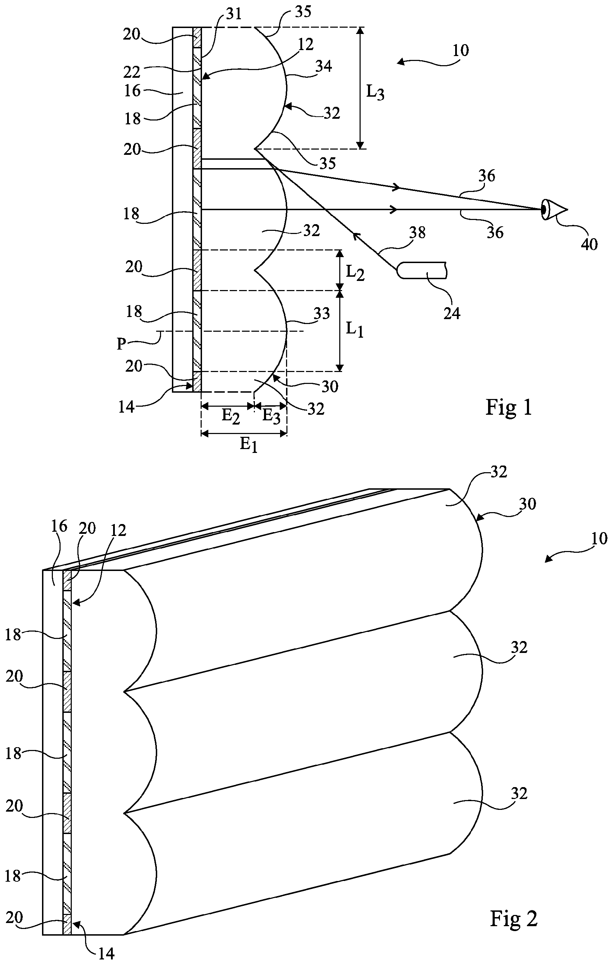

Les figures 1 et 2 représentent un mode de réalisation d'un système d'interface utilisateur 10 selon l'invention comprenant un dispositif d'affichage 12 et un dispositif de détection 14 réalisés sur le même support 16.

Le dispositif d'affichage 12 peut être un écran d'affichage. Les moyens de commande de l'écran d'affichage 12 et les moyens de traitement des signaux fournis par le dispositif de détection 14 ne sont pas représentés. L'écran d'affichage 12 peut correspondre à un écran à cristaux liquides, un écran plasma, un écran à base de composants semiconducteurs organiques, par exemple des diodes électroluminescentes organiques, etc. Le dispositif de détection 14 comprend des capteurs de photons ou photodétecteurs. La technologie pour la réalisation du dispositif de détection 14 peut dépendre de la technologie utilisée pour la réalisation de l'écran d'affichage 12. A titre d'exemple, lorsque l'écran d'affichage 12 correspond à un écran à cristaux liquides, le dispositif de détection 14 peut comprendre des photodétecteurs comme ceux décrits dans la demande de brevet US2010/0013793. Lorsque l'écran d'affichage 12 comprend des diodes électroluminescentes organiques, le dispositif de détection 14 peut comprendre des photodétecteurs réalisés à base de matériaux semiconducteurs organiques comme ceux décrits dans la demande de brevet FR11/58607.

L'écran d'affichage 12 comprend des rangées 18 de pixels et le dispositif de détection 14 comprend des rangées 20 de photodétecteurs. Sur les figures 1 et 2, trois rangées 18 de pixels et quatre rangées 20 de photodétecteurs sont représentées. A titre d'exemple, la largeur L₁ de chaque rangée 18 de pixels peut être de l'ordre de 200 micromètres et la largeur L₂ de chaque rangée 20 de photodétecteurs peut être de l'ordre 50 micromètres. Une rangée 18 de pixels est alternée avec une rangée 20 de photodétecteurs de sorte que, à l'exception des rangées situées aux extrémités du système d'interface utilisateur 10, chaque rangée 18 de pixels est intercalée entre deux rangées 20 de photodétecteurs et chaque rangée 20 de photodétecteurs est intercalée entre deux rangées 18 de pixels. Du côté opposé au support 16, l'écran d'affichage 12 et le dispositif de détection 14 forment une face plane 22. A titre de variante, la face 22 peut ne pas être plane.

Le dispositif de détection 14 peut être adapté à détecter des variations de l'ombre d'un organe d'actionnement 24 et/ou de la lumière réfléchie par l'organe d'actionnement 24 et à en déduire une information représentative d'une variation de position de l'organe d'actionnement 24. L'organe d'actionnement 24 peut être un doigt de l'utilisateur, sa main, ou tout autre objet, par exemple un stylet. On note que par position de l'organe d'actionnement 24, on entend ici une position relative par rapport au système d'interface utilisateur 10. On peut notamment prévoir un mode d'utilisation dans lequel c'est le système d'interface utilisateur lui-même qui est déplacé, l'organe d'actionnement restant fixe.

Le système d'interface utilisateur 10 comprend un réseau lenticulaire 30 recouvrant la face 22. Le réseau lenticulaire 30 peut être collé sur la face 22. Le réseau lenticulaire 30 comprend une face plane 31 qui repose sur la face 22. A titre de variante, lorsque la face 22 n'est pas plane, la face 31 épouse la forme de la face 22. Le réseau lenticulaire 30 comprend, par exemple, des lentilles cylindriques 32 jointives qui s'étendent parallèlement aux rangées 18 et 20. Il peut s'agir de lentilles cylindriques plan-convexes. Chaque lentille 32 comprend une face 33 non plane adaptée à faire converger ou diverger les rayons lumineux. A titre d'exemple, trois lentilles 32 sont représentées sur les figures 1 et 2.

Le réseau lenticulaire 30 peut être réalisé en matériau organique ou inorganique de qualité optique (et éventuellement en combinant plusieurs éléments optiques de différents matériaux). Un matériau de qualité optique est, par exemple, un matériau transparent dans la gamme des longueurs d'onde d'intérêt et permettant la réalisation de pièces ayant un bon état de surface.

Pour les matériaux organiques, on pourra citer les polycarbonates comme le matériau commercialisé par la société Westlake sous l'appellation Zelux ou le matériau commercialisé par la société Rôchling sous l'appellation Sustanat, les acryliques comme le PMMA (Polymethyl-Methacrylate) ou les polymères cyclo-oléfines (COP) comme le matériau commercialisé par la société Zeon Chemicals sous l'appellation Zeonex.

Pour les matériaux inorganiques, on pourra citer les verres optiques classiques, notamment :
les verres de type "crown", par exemple les verres borosilicatés tel que le verre commercialisé par la société Schott sous l'appellation BK7 ; ou
les verres de type "flint" par exemple le verre commercialisé par la société Schott sous l'appellation BaF4.

La largeur L₃ de chaque lentille 32 est sensiblement égale à la somme des largeurs L₁ et L₂. Le réseau lenticulaire 30 a une épaisseur maximale E₁ et une épaisseur minimale E₂. Chaque lentille 32 a une épaisseur E₃. La distance focale de chaque lentille 32 est ajustée afin que la zone photosensible 20 soit approximativement au foyer secondaire de la lentille 32.

Le réseau lenticulaire 30 est placé par rapport aux rangées 18 et 20 de sorte qu'une lentille 32 recouvre une rangée 18 de pixels sur toute la largeur L₁ et au moins une partie de la largeur L₂ d'au moins une rangée 20 de photodétecteurs. Dans le mode de réalisation représenté sur les figures 1 et 2, chaque lentille 32 recouvre une rangée 18 de pixels sur toute la largeur L₁, la moitié de la largeur L₂ de la rangée 20 de photodétecteurs située d'un côté de la rangée 18 de pixels et la moitié de la largeur L₂ de la rangée 20 de photodétecteurs située de l'autre côté de la rangée 18 de pixels. Chaque lentille 32 peut comprendre un plan de symétrie P. Le réseau lenticulaire 30 peut alors être placé par rapport aux rangées 18 et 20 de sorte que le plan P de chaque lentille 32 soit sensiblement situé au milieu d'une rangée 18 de pixels.

A titre d'exemple, le réseau lenticulaire 30 peut comprendre des lentilles plan-convexe 32 réalisées en verre commercialisé sous l'appellation BK7, disposées comme cela est représenté sur les figures 1 et 2, pour lequel la largeur L₃ est de 250 µm, l'épaisseur E₁ est de 150 µm, le rayon de courbure de chaque lentille 32 est de 200 µm et l'épaisseur E₃ est de 45 µm.

De façon générale, la surface 33 non plane de chaque lentille 32 comprend une portion centrale 34 et des portions périphériques 35. Les portions périphériques 35 dévient plus fortement les rayons lumineux que la portion centrale 34. La portion centrale 34 recouvre seulement la rangée 18 de pixels tandis qu'au moins une portion périphérique 35 recouvre au moins en partie une rangée 20 de photodétecteurs.

A titre d'exemple, la largeur de la projection orthogonale de la face non plane 33 sur la face 22 est sensiblement égale à L₃, la largeur de la projection orthogonale de la portion centrale 34 sur la face 22 est inférieure ou égale à L₁ et la somme des largeurs des projections orthogonales des portions périphériques 35 sur la face 22 est supérieure ou égale à L₂. De préférence, la surface de la projection orthogonale de la portion centrale 34 sur la face 22 est supérieure ou égale à 50 % de la surface de la projection orthogonale de la face non plane 33 sur la face 22.

Chaque lentille 32 dévie les rayons lumineux émis par la rangée 18 ou collectés par la rangée 20 (qui forme une zone sombre). Les rayons lumineux issus d'une rangée 18 de pixels et sensiblement perpendiculaires à la face 22 sont peu déviés et leurs directions restent relativement proches de l'axe optique tandis que les rayons lumineux réfléchis par une rangée 20 de photodétecteurs et sensiblement perpendiculaire à la face 22 sont déviés dans une direction s'écartant fortement de l'axe optique. A titre d'exemple, les trajets 36 de deux rayons lumineux émis par des pixels d'une rangée 18 de pixels et le trajet 38 d'un rayon lumineux réfléchi ou atteignant un photodétecteur d'une rangée 20 de photodétecteurs sont représentés en figure 1. De ce fait, un utilisateur 40 ne perçoit que les rayons lumineux issus des rangées 18 de pixels et ne perçoit pas la zone sombre des rangées 20 de photodétecteurs. L'utilisateur 40 ne voit donc que l'image diffusée par l'écran d'affichage 12 et ne voit pas le dispositif de détection 14.

On entend par inclinaison d'un rayon lumineux, l'angle entre le rayon lumineux et la normale de la face 22. Un rayon lumineux perpendiculaire à la face 22 a une inclinaison de 0°. Des rayons lumineux, dont l'inclinaison par rapport à la face 22 est importante, tendent à être déviés par les lentilles 32 et être reçus par les photodétecteurs du dispositif de détection 14. La détection de l'organe d'actionnement 24 qui est à proximité du réseau lenticulaire 30 peut se baser sur la détection de la présence ou de l'absence de ces rayons lumineux rasants. Le fonctionnement du dispositif de détection 14 n'est donc pas perturbé par la présence du réseau lenticulaire 30.

La surface focale de chaque lentille 32 peut ne pas être plane. Dans ce cas, chaque rangée 20 de photodétecteurs est, de préférence, disposée au niveau de la surface focale de la lentille 32, tandis que la rangée 18 de pixels peut être décalée par rapport à la surface focale de la lentille 32 associée. Toutefois, le fait que la rangée 18 de pixels ne soit pas située au niveau de la surface focale de la lentille 32 associée ne perturbe pas le fonctionnement du dispositif d'affichage 12 dans la mesure où une lentille 32 ne recouvre qu'une seule rangée de pixels et que chaque pixel émet un rayonnement lumineux uniforme.

Le dispositif de détection 14 peut être adapté à détecter des déplacements de l'organe d'actionnement 24 dans un plan parallèle à la face 22, et des variations de la distance entre l'organe d'actionnement 24 et la face 22.

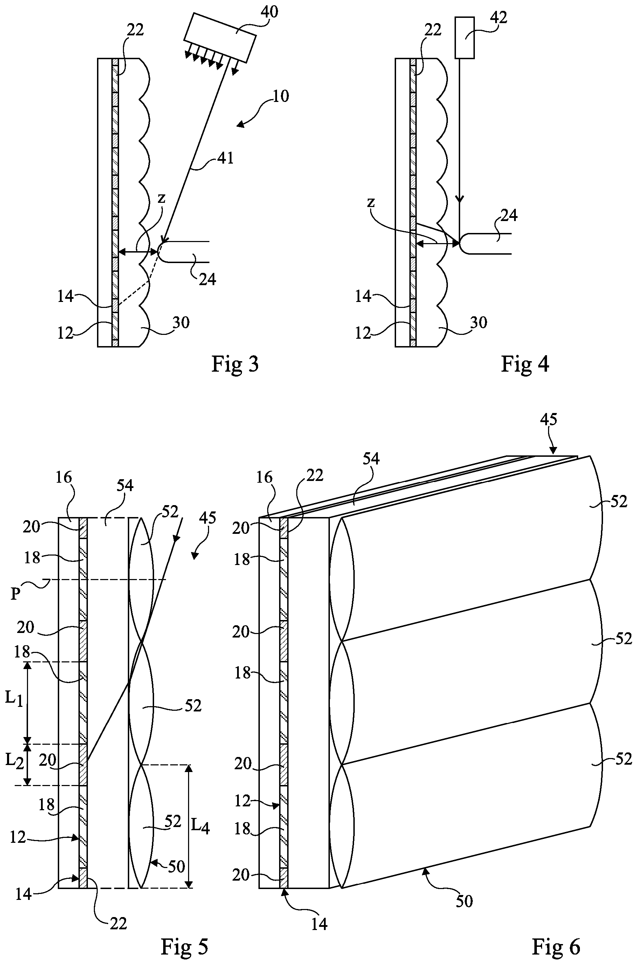

La figure 3 illustre un principe de fonctionnement du système d'interface utilisateur 10 selon lequel le dispositif de détection 14 est adapté à détecter des variations de l'ombre de l'organe d'actionnement 24 sur le système 10 et à en déduire une information représentative d'une variation de position de l'organe d'actionnement 24. L'organe d'actionnement 24 doit être interposé entre le système 10 et une source de lumière. La source de lumière est de préférence la lumière ambiante, par exemple le soleil ou l'éclairage électrique intérieur d'une pièce d'un bâtiment. Toutefois, en raison de la lumière produite par l'écran d'affichage 12, il peut être nécessaire de prévoir une source de lumière 40 spécifique qui émet une lumière peu inclinée par rapport à la face 22. La source de lumière 40 est, de préférence, prévue à la périphérie du dispositif de détection 14 pour ne pas gêner la visualisation de l'écran d'affichage 12. On a représenté en figure 3 le parcours d'un rayon lumineux 41 interrompu par l'organe d'actionnement 24, la partie restante du parcours du rayon lumineux 41 en l'absence de l'organe d'actionnement 24 est indiquée en traits pointillés.

A titre d'exemple, lors d'une phase d'initialisation, le dispositif de détection 14 mesure la luminosité ambiante, c'est-à-dire l'intensité lumineuse reçue par chaque photodétecteur du dispositif de détection 14 lorsqu'aucun organe d'actionnement 24 n'est disposé en regard du dispositif de détection 14.

Lorsque l'organe d'actionnement 24 est placé entre la source lumineuse et le dispositif de détection 14, l'ombre portée de l'organe d'actionnement 24 sur le dispositif de détection 14 entraîne une diminution de l'intensité lumineuse reçue par certains photodétecteurs. Ceci permet au dispositif de détection 14 de détecter la présence de l'organe d'actionnement 24 à proximité du dispositif de détection 14 et, le cas échéant, de suivre les déplacements de l'organe d'actionnement 24 dans un plan parallèle à la face 22.

Lorsque la distance Z entre l'organe d'actionnement 24 et le dispositif de détection 14 varie, le niveau d'intensité lumineuse reçu par les photodétecteurs varie également. En particulier, lorsque l'organe d'actionnement 24 est approché du dispositif de détection 14, l'intensité lumineuse reçue par les photodétecteurs à l'ombre de l'organe d'actionnement 24 diminue, et lorsque l'organe d'actionnement 24 est éloigné du dispositif de détection, l'intensité lumineuse augmente. Le dispositif de détection 14 est adapté à déduire des variations d'intensité de l'ombre portée de l'organe d'actionnement 24 une information relative aux variations de la distance entre l'organe d'actionnement 24 et le dispositif de détection 14. Dans une variante de réalisation, on peut prévoir une phase d'étalonnage permettant de réaliser une correspondance entre le niveau d'intensité de l'ombre portée de l'organe d'actionnement 24 et la distance entre l'organe d'actionnement 24 et le dispositif de détection 14. Ceci permet au dispositif de détection 14 de mesurer la distance entre l'organe d'actionnement 24 et le dispositif de détection 14.

La figure 4 illustre un autre principe de fonctionnement du système d'interface utilisateur 10 selon lequel le dispositif de détection 14 est adapté à détecter des variations de l'image de l'organe d'actionnement 24 sur le système 10 et à en déduire une information représentative d'une variation de position de l'organe d'actionnement 24. Le système 10 comprend, en outre, une ou plusieurs sources 42 de lumière, par exemple infrarouge, qui se réfléchit sur l'organe d'actionnement 24. Les rayons lumineux réfléchis sont détectés par les photodétecteurs situés à proximité de l'organe d'actionnement 24. Les sources de lumière 42 peuvent correspondre à des émetteurs infrarouges situés à la périphérie du dispositif de détection 14. A titre de variante, il peut s'agir d'émetteurs infrarouges intégrés au dispositif de détection 14 ou à l'écran d'affichage 12. Ainsi, les émetteurs infrarouges, en combinaison avec les photodétecteurs du dispositif de détection 14, permettent au système 10 de mettre en oeuvre les mêmes fonctions de détection des variations de position de l'organe d'actionnement 24 que les photodétecteurs seuls utilisés comme détecteurs d'ombrage.

Ainsi, dans un mode de réalisation préféré, le dispositif de détection 14 est adapté à détecter la position en trois dimensions de l'organe d'actionnement 24 dans l'espace situé en regard du dispositif de détection 14.

Les figures 5 et 6 représentent un autre mode de réalisation d'un système d'interface utilisateur 45 selon l'invention dans lequel le réseau lenticulaire 50 est constitué d'un réseau de lentilles cylindriques biconvexes 52. A titre d'exemple, trois lentilles cylindriques biconvexes 52 sont représentées.

Le réseau lenticulaire 50 peut être séparé de la face 22 par une plaque transparente 54 interposée entre la face 22 et le réseau lenticulaire 50. A titre de variante, le réseau lenticulaire 50 peut être posé directement sur la face 22. Comme pour le réseau lenticulaire 30 décrit précédemment en relation avec les figures 1 et 2, la largeur L₄ de chaque lentille cylindrique biconvexe 52 peut être égale à la somme des largeurs L₁ et L₂. En outre, le réseau lenticulaire 50 est disposé par rapport à la face 22 de façon analogue à ce qui a été décrit précédemment pour le réseau lenticulaire 30. Le réseau lenticulaire 50 est placé par rapport aux rangées 18 et 20 de sorte qu'une lentille 52 recouvre une rangée 18 de pixels sur toute la largeur L₁ et au moins une partie de la largeur L₂ d'au moins une rangée 20 de photodétecteurs. Dans le mode de réalisation représenté sur les figures 5 et 6, chaque lentille 52 recouvre une rangée 18 de pixels sur toute la largeur L₁, la moitié de la largeur L₂ de la rangée 20 de photodétecteurs située d'un côté de la rangée 18 de pixels et la moitié de la largeur L₂ de la rangée 20 de photodétecteurs située de l'autre côté de la rangée 18 de pixels. Chaque lentille 52 peut comprendre un plan de symétrie P. Le réseau lenticulaire 50 est placé par rapport aux rangées 18 et 20 de sorte que le plan P de chaque lentille 52 soit sensiblement situé au milieu d'une rangée 18 de pixels.

L'utilisation de lentilles biconvexes 52 par rapport à des lentilles plan-convexes 32 permet avantageusement de réduire la courbure de la surface focale et d'augmenter le rayon de courbure des lentilles 52 approximativement d'un facteur 2. Les aberrations géométriques hors de l'axe optique sont ainsi réduites. De plus, on diminue l'effet d'écran qui correspond au blocage de rayons lumineux qui devraient théoriquement atteindre une lentille, par la présence d'une lentille adjacente.

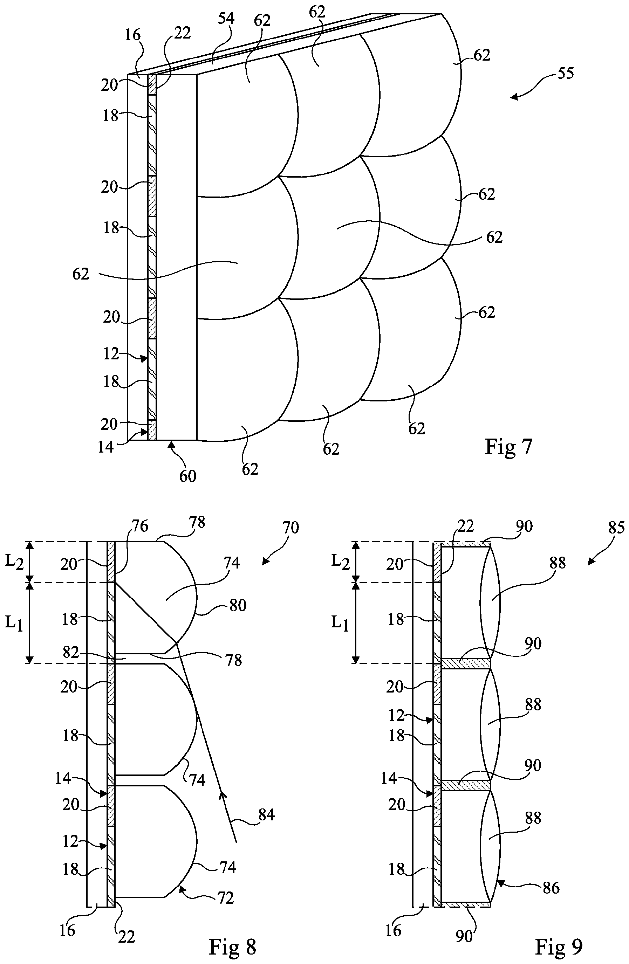

La figure 7 représente un autre mode de réalisation d'un système d'interface utilisateur 55 selon l'invention dans lequel le réseau lenticulaire 60 est constitué d'un réseau de lentilles 62 convergentes à base circulaire, carrée ou rectangulaire. A titre d'exemple, en figure 7, neuf lentilles 62 convergentes du type plan-convexe à base carrée sont représentées. Chaque lentille 62 recouvre en totalité un pixel d'une rangée 18 de pixels et au moins en partie un photodétecteur d'une rangée 20 de photodétecteurs. De façon avantageuse, chaque pixel comprend un axe de symétrie. L'axe optique de chaque lentille 62 est alors de préférence sensiblement confondu avec l'axe de symétrie du pixel qu'il recouvre. A titre de variante, chaque lentille 62 peut être une lentille convergente biconvexe ou à ménisque convergent ou la combinaison de plusieurs lentilles telles qu'utilisées traditionnellement en optique (par exemple en utilisant des doublets ou des triplets pour réduire les aberrations chromatiques).

Dans les modes de réalisation décrits précédemment, chaque photodétecteur d'une rangée 20 est susceptible de recevoir des rayons lumineux rasants indépendamment de leur orientation. A titre d'exemple, en figure 1, chaque photodétecteur d'une rangée 20 peut recevoir des rayons lumineux rasants provenant du haut ou du bas de la figure. Toutefois, pour certaines applications, il peut être souhaitable qu'un photodétecteur ne détecte que les rayons lumineux rasants provenant d'une orientation privilégiée.

La figure 8 représente un mode de réalisation d'un système d'interface utilisateur 70 dans lequel la détection des rayons lumineux est privilégiée selon une orientation particulière. Dans ce mode de réalisation, le réseau lenticulaire 72 comprend des lentilles cylindriques 74 séparées les unes des autres. Chaque lentille cylindrique 74 s'étend parallèlement aux rangées 18, 20. Chaque lentille 74 comprend une base 76 au contact de la face 22, deux flancs latéraux parallèles 78 et une surface bombée 80. Le flanc latéral 78 d'une lentille 74 est séparé du flanc latéral 78 d'une lentille 74 adjacente par un interstice 82. L'interstice 82 peut être rempli d'air. Les flancs latéraux 78 de chaque lentille 74 peuvent, en outre, être recouverts d'un matériau réfléchissant, par exemple un matériau métallique. A titre de variante, l'interstice 82 peut être rempli en totalité d'un matériau opaque.

Chaque lentille cylindrique 74 recouvre une rangée 18 de pixels sensiblement sur toute sa largeur L₁ et une rangée 20 de photodétecteurs sensiblement sur toute sa largeur L₂, les rangées 18 et 20 étant contigües. Le parcours 84 d'un rayon lumineux est représenté en figure 8. Seuls les rayons lumineux rasants provenant du bas en figure 8 peuvent être détectés par les photodétecteurs.

La figure 9 représente un mode de réalisation d'un système d'interface utilisateur 85 dans lequel la détection des rayons lumineux est privilégiée selon une orientation particulière. Dans ce mode de réalisation, le réseau lenticulaire 86 comprend des lentilles cylindriques 88 séparées les unes des autres. Les lentilles cylindriques 88 s'étendent parallèlement aux rangées 18, 20. De préférence, les lentilles 88 sont des lentilles biconvexes. Chaque lentille 88 est maintenue par deux supports 90 d'un matériau opaque interposés entre le réseau lenticulaire 86 et la face 22. Un support 90 peut être au contact de deux lentilles 88. Les supports 90 peuvent avoir la forme de parois s'étendant parallèlement à la direction des rangées 18 et 20. Les supports 90 peuvent être fixés à la face 22 sensiblement à la frontière entre une rangée 18 de pixels et une rangée 20 de photodétecteurs de sorte qu'une seule rangée 18 de pixels et une seule rangée 20 de photodétecteurs se trouvent entre deux supports 90 successifs.

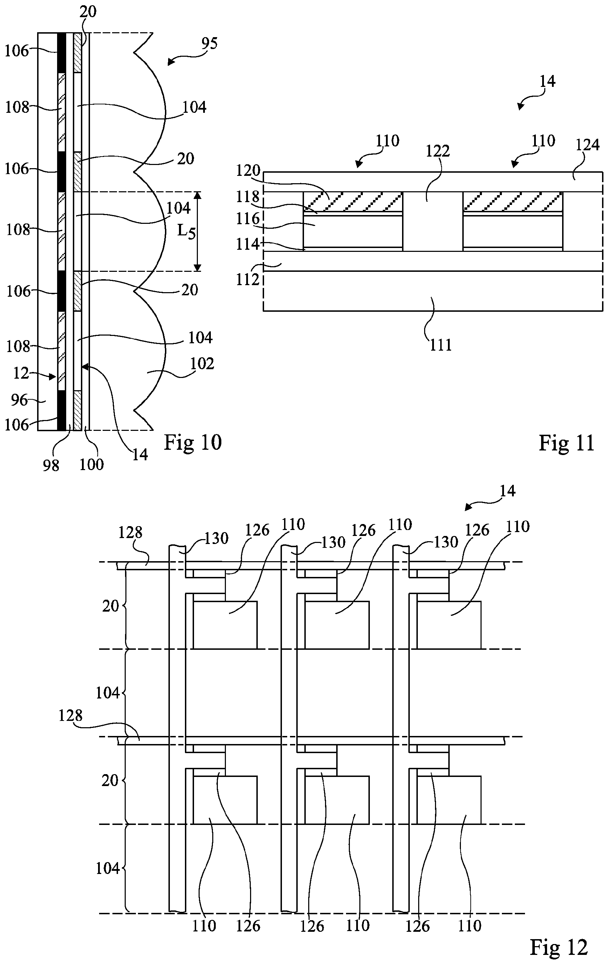

La figure 10 représente un autre mode de réalisation d'un système d'interface utilisateur 95 selon l'invention dans lequel le dispositif de détection 14 recouvre le dispositif d'affichage 12. Le système d'interface utilisateur 95 comprend un support 96 sur lequel est réalisé le dispositif d'affichage 12. Le dispositif d'affichage 12 peut correspondre à une image formée sur le support 96, par exemple par n'importe quelle technique d'impression. A titre d'exemple, l'image est réalisée sur une affiche papier ou plastique, sur une plaque de verre, sur du carton, sur du tissu, etc. Le dispositif d'affichage 12 peut correspondre à un écran d'affichage. Le dispositif d'affichage 12 peut comprendre une matrice de pixels recouvrant le support 96. Le dispositif d'affichage 14 est, par exemple, un écran à diodes électroluminescentes organiques. La réalisation de diodes électroluminescentes organiques par des techniques d'impression est, par exemple, décrite dans l'article "CEA-LITEN S2S printing platform for Organic CMOS and Sensors Devices".

Le dispositif de détection 14 est pris en sandwich entre deux couches de protection transparentes 98 et 100 et recouvre le dispositif d'affichage 12. Un réseau lenticulaire 102 recouvre le dispositif de détection 14. En figure 10, le réseau lenticulaire 102 a la même structure que le réseau lenticulaire 30 représenté en figure 1. A titre de variante, le réseau lenticulaire 102 peut avoir la même structure que les réseaux lenticulaires 50, 60, 72, 86 décrits précédemment.

Le dispositif de détection 14 comprend des rangées 20 de photodétecteurs séparées par des bandes transparentes 104 de sorte que, pour chaque paire de rangées 20 de photodétecteurs successives, une bande transparente 104 est interposée entre les deux rangées 20.

Le dispositif d'affichage 12 peut correspondre à un écran d'affichage connu dans lequel les rangées de pixels sont sensiblement jointives. Les rangées 20 de photodétecteurs sont alors orientées parallèlement aux rangées de pixels de l'écran d'affichage 12. En outre, de préférence, l'écran d'affichage 12 est commandé de sorte que la rangée de pixel ou les rangées de pixels qui sont recouvertes par une rangée 20 de photodétecteurs n'émettent pas de lumière, les pixels étant laissés noirs. De préférence, la largeur L₅ de chaque bande transparente 104 peut être sensiblement égale à la largeur d'une rangée de pixels de l'écran matriciel 12. Dans ce cas, chaque bande transparente 104 recouvre une seule rangée de pixels de l'écran matriciel. A titre de variante, la largeur L₅ de chaque bande transparente 104 peut être strictement supérieure à la largeur d'une rangée de pixels de l'écran matriciel 12. Dans ce cas, chaque bande transparente 104 recouvre plus d'une rangée de pixels de l'écran matriciel 12. En figure 10, le dispositif d'affichage 12 est représenté par des bandes noires 106 et des bandes hachurées 108, chaque bande noire 106 correspondant à une portion du dispositif d'affichage 12 recouverte d'une rangée 20 de photodétecteurs et chaque bande hachurée 108 correspondant à une portion du dispositif d'affichage 12 recouverte d'une bande transparente 104. Chaque bande 106 et 108 peut correspondre à une rangée de pixels ou à plus d'une rangée de pixels.

La figure 11 est une vue en coupe, partielle et schématique, d'un mode de réalisation des photodétecteurs du dispositif de détection 14, particulièrement adapté au cas où le dispositif de détection 14 est fixé au dispositif d'affichage 12. En figure 11, deux photodétecteurs 110 sont représentés. Les photodétecteurs 110 sont formés sur une face d'un support 111 ou substrat diélectrique transparent ou translucide, par exemple en verre ou en plastique, par exemple la couche de protection 98 décrite précédemment.

Chaque photodétecteur 110 comprend un empilement comportant, dans l'ordre à partir du substrat 111 :
- une électrode transparente 112, par exemple, en oxyde conducteur et transparent ou TCO (acronyme anglais pour Transparent Conductive Oxide), par exemple en oxyde d'indium dopé à l'étain ou ITO (acronyme anglais pour Indium Tin Oxide) ;
- une portion 114 injectrice d'électrons, par exemple en un polymère semiconducteur organique transparent très dopé ou en un oxyde métallique transparent et conducteur, par exemple de type ZnO ;
- une portion 116 en un mélange de polymères semiconducteurs organiques, par exemple le poly(3-hexylthiophène) ou poly(3-hexylthiophène-2,5-diyl) (semiconducteur de type P), connu sous la dénomination P3HT, mélangé avec le [6,6]-phényl-C₆₁-butanoate de méthyle (semiconducteur de type N), connu sous la dénomination PCBM ;
- une portion 118 en un polymère semiconducteur organique très dopé (couche injectrice de trous), par exemple un polymère connu sous la dénomination PEDOT:PSS, qui est un mélange de poly(3,4)-éthylènedioxythiophène et de polystyrène sulfonate de sodium ; et
- une électrode 120, par exemple en aluminium ou en argent.

Latéralement, les régions semiconductrices 116 des photodétecteurs 110 sont séparées les unes des autres par un matériau diélectrique 122. En outre, un revêtement 124 de protection transparent recouvre la face supérieure de la matrice (côté électrodes 118). Il s'agit, par exemple, de la couche de protection 100 décrite précédemment.

Dans cet exemple, les photodétecteurs 110 sont destinés à être éclairés à travers le substrat transparent 98 (et à travers les couches transparentes 112 et 114).

Les électrodes transparentes 112 peuvent avoir, en vue de dessus, la forme de bandes parallèles. Dans ce cas, les électrodes opaques 118 peuvent correspondre à des bandes parallèles, chaque bande 118 étant connectée à tous les photodétecteurs d'une même rangée 20 du dispositif de détection 12 et les bandes transparentes 112 s'étendent perpendiculairement aux rangées 20 et sont connectées à des photodétecteurs de rangées 20 différentes. A titre de variante, les électrodes 112 peuvent faire partie d'une plaque du matériau conducteur et transparent au contact avec tous les photodétecteurs 110.

Les photodétecteurs 110 du dispositif de détection 14 peuvent être réalisés par des techniques d'impression. Les matériaux des couches 114 à 124 décrites précédemment sont déposés sous forme liquide, par exemple sous forme d'encres conductrices et semiconductrices à l'aide d'imprimantes à jet d'encre. Par matériaux sous forme liquide, on entend ici également des matériaux en gel déposables par des techniques d'impression. Des étapes de recuit sont éventuellement prévues entre les dépôts des différentes couches, mais les températures de recuit peuvent ne pas dépasser 150°C, et le dépôt et les éventuels recuits peuvent être réalisés à la pression atmosphérique.

La réalisation de composants semiconducteurs organiques par des techniques d'impression est par exemple décrite dans l'article "CEA-LITEN S2S printing platform for Organic CMOS and Sensors Devices" de Jean-Yves Laurent et al, conférence LOPE-C, juin 2011, Francfort.

La figure 12 est une vue schématique de dessus du dispositif de détection 14 décrivant plus en détail les moyens d'adressage des photodétecteurs 110. On a représenté, de façon schématique et partielle en figure 12, deux rangées 20 comprenant chacune trois photodétecteurs 110. Un élément de sélection 126 est associé à chaque photodétecteur 110. L'élément de sélection 126 peut correspondre à un transistor organique (en anglais Organic Thin Film Transistor ou OTFT). L'une des bornes parmi la source et le drain du transistor 126 est connectée à l'électrode 120 du photodétecteur 110 et l'autre borne parmi la source et le drain est connectée à une piste conductrice 128. La piste conductrice 128 peut être connectée à tous les éléments de sélection 126 d'une rangée 20. La piste 128 peut être en un matériau opaque, par exemple en métal. La grille de chaque transistor 126 peut être commandée par un signal transmis par une piste 130 d'un matériau conducteur et transparent s'étendant selon une direction perpendiculaire aux rangées 20. La piste 130 peut être connectée aux transistors 126 de rangées 20 différentes.

Des modes de réalisation particuliers de la présente invention ont été décrits. Diverses variantes et modifications apparaîtront à l'homme de l'art. En particulier, des exemples de réseau lenticulaire à lentilles cylindriques plan-convexes, lentilles cylindriques biconvexes et lentilles convergentes ont été décrits. Toutefois, il est clair que la présente invention peut être mise en oeuvre avec des réseaux lenticulaires comprenant des lentilles cylindriques plan-concaves, des lentilles cylindriques biconcaves ou des lentilles divergentes ou toutes combinaisons de ces lentilles.

Divers modes de réalisation avec diverses variantes ont été décrits ci-dessus. On note que l'homme de l'art peut combiner divers éléments de ces divers modes de réalisation et variantes sans faire preuve d'activité inventive. A titre d'exemple, le mode de réalisation décrit en relation avec la figure 7 dans lequel les lentilles non cylindriques sont à base circulaire, rectangulaire, ou carrée peut être mis en oeuvre pour le système d'interface utilisateur 70 décrit en relation avec la figure 8, les lentilles à base circulaire, rectangulaire, ou carrée étant à distance les unes des autres, ou pour le système d'interface utilisateur 85 décrit en relation avec la figure 9, les supports 90 pouvant alors suivre le contour des lentilles pour servir de support à celles-ci.

## Revendications

1. Système d'interface utilisateur (10 ; 45 ; 55 ; 70 ; 85 ; 95) comprenant un dispositif de détection (14) d'un organe d'actionnement (24) comprenant des rangées (20) de capteurs de photons (110) et des lentilles (32 ; 52 ; 62 ; 74 ; 88), chaque lentille recouvrant, à l'exception de la portion centrale (34) de la lentille, au moins partiellement une rangée de capteurs de photons, le système comprenant, en outre, un dispositif d'affichage (12) comprenant des rangées (18) de pixels, les lentilles (32 ; 52 ; 62 ; 74 ; 88) recouvrant les pixels et les capteurs de photons, la portion centrale (34) de chaque lentille recouvrant au moins un pixel et ne recouvrant pas de capteur de photons, **caractérisé en ce que** le dispositif de détection (14) recouvre le dispositif d'affichage (12) et les rangées (20) de capteurs de photons (110) sont séparées par des bandes transparentes (104), chaque bande transparente recouvrant au moins une rangée (18) de pixels.

2. Système d'interface utilisateur selon la revendication 1, dans lequel chaque lentille (32) comprend une face non plane (33) comprenant ladite portion centrale (34) et dans lequel, pour chaque lentille (32), la surface de la projection orthogonale de la portion centrale (34) sur un plan contenant les rangées (20) est supérieure ou égale à 50 % de la surface de la projection orthogonale de la face non plane (33) sur ledit plan.

3. Système d'interface utilisateur selon la revendication 1, dans lequel chaque lentille (32 ; 52 ; 62 ; 74 ; 88) comprend une portion périphérique (35) entourant la portion centrale (34), au moins une partie de la portion périphérique recouvrant au moins une partie d'une rangée (20) de capteurs de photons (110).

4. Système d'interface utilisateur selon l'une quelconque des revendications 1 à 3, dans lequel les rangées (18) de pixels sont parallèles aux rangées (20) de capteurs de photons (110).

5. Système d'interface utilisateur selon l'une quelconque des revendications 1 à 4, dans lequel chaque lentille (32 ; 52 ; 62 ; 74 ; 88) recouvre la totalité de la largeur (L₁) d'une seule rangée (18) de pixels.

6. Système d'interface utilisateur selon l'une quelconque des revendications 1 à 5, dans lequel chaque lentille (32 ; 52 ; 74 ; 88) est une lentille cylindrique s'étendant parallèlement aux rangées (20) de capteurs de photons (110).

7. Système d'interface utilisateur selon l'une quelconque des revendications 1 à 6, dans lequel le dispositif d'affichage (12) est un écran d'affichage, les pixels recouverts par les rangées (20) de capteurs de photons restant noirs en fonctionnement.

8. Système d'interface utilisateur selon l'une quelconque des revendications 1 à 7, dans lequel les lentilles (32 ; 52 ; 62) sont jointives.

9. Système d'interface utilisateur selon l'une quelconque des revendications 1 à 7, dans lequel les lentilles (74 ; 88) sont séparées les unes des autres par un interstice d'air (78) ou par un matériau opaque (90).

10. Système d'interface utilisateur selon l'une quelconque des revendications 1 à 9, dans lequel le dispositif de détection (14) est adapté à détecter des variations de l'ombre et/ou de l'image de l'organe d'actionnement (24) et à en déduire une information représentative d'une variation de position de l'organe d'actionnement.

11. Système d'interface utilisateur selon l'une quelconque des revendications 1 à 10, comprenant des émetteurs infrarouges (42).

12. Système d'interface utilisateur selon l'une quelconque des revendications 1 à 11, dans lequel les capteurs de photons (110) sont des capteurs organiques réalisés par dépôt de matériaux conducteurs et semiconducteurs organiques sous forme liquide sur un support diélectrique.

13. Système d'interface utilisateur selon l'une quelconque des revendications 1 à 12, dans lequel le dispositif d'affichage (12) comprend un écran d'affichage ou une image fixée à un support (96).

## Patentansprüche

1. Anwenderschnittstellensystem (10; 45; 55; 70; 85; 95), welches eine Detektionsvorrichtung (14) eines Betätigungsgliedes (24) aufweist, welches Zeilen (20) von Photonensensoren (110) und Linsen (32; 52; 62; 74; 88) aufweist, wobei jede Linse, außer dem mittlerem Teil (34) der Linse, zumindest teilweise eine Zeile der Photonensensoren bedeckt, wobei das System weiter eine Anzeigevorrichtung (12) aufweist, die Zeilen (18) von Pixeln aufweist, wobei die Linsen (32; 52; 62; 74; 88) die Pixel und die Photonensensoren bedecken, wobei der mittlere Teil (34) von jeder Linse zumindest ein Pixel bedeckt und keinen Photonensensor bedeckt, **dadurch gekennzeichnet, dass** die Detektionsvorrichtung (14) die Anzeigevorrichtung (12) bedeckt und die Zeilen (20) der Photonensensoren (110) durch transparente Streifen (104) getrennt sind, wobei jeder transparente Streifen zumindest eine Zeile (18) von Pixeln bedeckt.

2. Anwenderschnittstellensystem nach Anspruch 1, wobei jede Linse (32) eine nicht ebene Oberfläche (33) aufweist, welche den mittleren Teil (34) aufweist, und wobei für jede Linse (32) die Oberfläche der orthogonalen Projektion des mittleren Teils (34) auf eine Ebene, welche die Zeilen (20) enthält, größer oder gleich 50% der Oberfläche der orthogonalen Projektion der nichtebenen Oberfläche (33) auf die Ebene ist.

3. Anwenderschnittstellensystem nach Anspruch 1, wobei jede Linse (32; 52; 62; 74; 88) einen Umfangsteil (35) aufweist, der den mittleren Teil (34) umgibt, wobei zumindest ein Teil des Umfangsteils zumindest einen Teil einer Zeile (20) von Photonensensoren (110) bedeckt.

4. Anwenderschnittstellensystem nach einem der Ansprüche 1 bis 3, wobei die Pixelzeilen (18) parallel zu den Zeilen (20) von Photonensensoren (110) sind.

5. Anwenderschnittstellensystem nach einem der Ansprüche 1 bis 4, wobei jede Linse (32; 52; 62; 74; 88) die gesamte Breite (L₁) einer einzelnen Zeile (18) von Pixeln bedeckt.

6. Anwenderschnittstellensystem nach einem der Ansprüche 1 bis 5, wobei jede Linse (32; 52; 74; 88) eine zylindrische Linse ist, die sich parallel zu den Zeilen (20) von Photonensensoren (110) erstreckt.

7. Anwenderschnittstellensystem nach einem der Ansprüche 1 bis 6, wobei die Anzeigevorrichtung (12) ein Anzeigebildschirm ist, wobei die Pixel, die durch die Zeilen (20) von Photonensensoren bedeckt sind, im Betrieb schwarz bleiben.

8. Anwenderschnittstellensystem nach einem der Ansprüche 1 bis 7, wobei die Linsen (32; 52; 62) aneinander angrenzend sind.

9. Anwenderschnittstellensystem nach einem der Ansprüche 1 bis 7, wobei die Linsen (74; 88) voneinander durch einen Luftspalt (78) oder durch ein undurchsichtiges Material (90) getrennt sind.

10. Anwenderschnittstellensystem nach einem der Ansprüche 1 bis 9, wobei die Detektionsvorrichtung (14) konfiguriert ist, um Variationen des Schattens und/oder des Bildes des Betätigungsgliedes (24) zu detektieren und daraus Informationen abzuleiten, die eine Positionsveränderung des Betätigungsgliedes darstellen.

11. Anwenderschnittstellensystem nach einem der Ansprüche 1 bis 10, welches Infrarotemitter (42) aufweist.

12. Anwenderschnittstellensystem nach einem der Ansprüche 1 bis 11, wobei die Photonensensoren (110) organische Sensoren sind, die durch eine Ablagerung von organischen leitenden und halbleitenden Materialien in flüssiger Form auf einem dielektrischen Träger geformt sind.

13. Anwenderschnittstellensystem nach einem der Ansprüche 1 bis 12, wobei die Anzeigevorrichtung (12) einen Anzeigebildschirm oder ein Bild aufweist, der bzw. das an einem Träger (96) angebracht ist.

## Claims

1. A user interface system (10; 45; 55; 70; 85; 95) comprising a device for detecting (14) an actuation member (24) comprising rows (20) of photon sensors (110) and lenses (32; 52; 62; 74; 88), each lens covering, except for the central portion (34) of the lens, at least partially a row of photon sensors, the system further comprising a display device (12) comprising rows (18) of pixels, the lenses (32; 52; 62; 74; 88) covering the pixels and the photon sensors, the central portion (34) of each lens covering at least one pixel and covering no photon sensor, **characterized in that** the detection device (14) covers the display device (12) and the rows (20) of photon sensors (110) are separated by transparent strips (104), each transparent strip covering at least one row (18) of pixels.

2. The user interface system of claim 1, wherein each lens (32) comprises a non-planar surface (33) comprising said central portion (34) and wherein, for each lens (32), the surface area of the orthogonal projection of the central portion (34) on a plane containing the rows (20) is greater than or equal to 50% of the surface area of the orthogonal projection of the non-planar surface (33) on said plane.

3. The user interface system of claim 1, wherein each lens (32; 52; 62; 74; 88) comprises a peripheral portion (35) surrounding the central portion (34), at least a portion of the peripheral portion covering at least a portion of a row (20) of photon sensors (110).

4. The user interface system of any of claims 1 to 3, wherein the pixel rows (18) are parallel to the rows (20) of photon sensors (110).

5. The user interface system of any of claims 1 to 4, wherein each lens (32; 52; 62; 74; 88) covers the entire width (L₁) of a single row (18) of pixels.

6. The user interface system of any of claims 1 to 5, wherein each lens (32; 52; 74; 88) is a cylindrical lens extending parallel to the rows (20) of photon sensors (110).

7. The user interface system of any of claims 1 to 6, wherein the display device (12) is a display screen, the pixels covered by the rows (20) of photon sensors remaining black in operation.

8. The user interface system of any of claims 1 to 7, wherein the lenses (32; 52; 62) are contiguous.

9. The user interface system of any of claims 1 to 7, wherein the lenses (74; 88) are separated from one another by an air gap (78) or by an opaque material (90).

10. The user interface system of any of claims 1 to 9, wherein the detection device (14) is configured for detecting variations of the shadow and/or of the image of the actuation member (24) and deducing therefrom information representative of a position variation of the actuation member.

11. The user interface system of any of claims 1 to 10, comprising infrared emitters (42).

12. The user interface system of any of claims 1 to 11, wherein the photon sensors (110) are organic sensors formed by deposition of organic conductive and semiconductor materials in liquid form on a dielectric support.

13. The user interface system of any of claims 1 to 12, wherein the display device (12) comprises a display screen or an image attached to a support (96).
